# EUROPEAN PATENT APPLICATION

(11) **EP 4 825 340 A1**
(43) Date of publication of application: **21.10.2026**
(21) Application number: 24902477.9
(22) Date of filing: 13.11.2024
(51) Int. Cl.: A61C 17/22, A61C 17/16, A61C 17/34

(54) **ELECTRIC TOOTHBRUSH**

(30) Priority: 11.12.2023 CN 202311697705
(71) Applicant: Dai, Xiaoguo, Shanghai 201506 (CN); Shanghai Shift Electrics Co., Ltd., Shanghai 201506 (CN)
(72) Inventor: DAI, Xiaoguo, Shanghai 201506 (CN)
(74) Representative: WSL Patentanwälte Partnerschaft mbB
(86) International application number: PCT/CN2024/131714
(87) International publication number: WO 2025/124054

(57) **Abstract**

The present disclosure discloses an electric toothbrush, comprising: a handle housing, a rear cover, and a rack. The rack is arranged to be stationary in a handle accommodating cavity relative to the handle housing, and has a battery receiving portion. The electric toothbrush further comprises an electrical connection assembly having a bracket and a conductive member mounted on the bracket. The electrical connection assembly is arranged adjacent to the battery receiving portion of the rack and is attached to the rack via a sliding mechanism, which is configured to allow the electrical connection assembly to slide relative to the rack between a first position in which the conductive member of the electrical connection assembly is located at an end of the battery receiving portion to permit electrical connection and a second position in which the electrical connection assembly moves the conductive member away from the battery receiving portion to form a passage allowing a battery to be installed or removed relative to the battery receiving portion. With the electric toothbrush according to the present disclosure, after the rechargeable battery is damaged or attenuated, ordinary consumers can readily replace the rechargeable battery without special tools, thereby allowing the continued use of the electric toothbrush.

## Description

### TECHNICAL FIELD

The present disclosure relates to an electric toothbrush, and more specifically to an electric toothbrush with a replaceable battery. Furthermore, the present disclosure further relates to a power supply assembly adapted for an electric toothbrush.

### BACKGROUND

Electric toothbrushes are widely used. Common electric toothbrushes currently available have rechargeable batteries. However, replacing the rechargeable batteries in most electric toothbrushes is inconvenient. In existing electric toothbrushes, conductive members of the rechargeable battery are electrically connected to a PCB board via soldering. To replace the battery, the entire internal assembly is required to be removed from the handle housing using a tool, then an electrical connection between the battery and the PCBA is disconnected using a soldering iron to remove the battery. A new battery is then soldered onto the PCBA using the soldering iron, and the entire internal assembly is reassembled back into the handle housing. The above process is relatively complicated, and since the internal assembly also comprises a transducer and a switch, removing and reinstalling the internal assembly is a complicated process that an ordinary consumer cannot readily accomplish the replacement, which typically necessitates intervention by a professional to avoid a degradation in the performance of the electric toothbrush. In conclusion, the drawbacks of disassembling and replacing the battery may cause consumers to forgo battery replacement, which is unfavorable for environmental protection and low-carbon sustainability.

Therefore, it is desirable to improve the electric toothbrush so that, when the rechargeable battery has deteriorated or been damaged, an ordinary consumer can readily replace the rechargeable battery to continue using the electric toothbrush.

### SUMMARY

To overcome the shortcomings of the prior art, the disclosure provides an electric toothbrush comprising: a handle housing having a handle accommodating cavity formed therein, the handle accommodating cavity having an opening at a rear end; a rear cover detachably attached to the opening of the handle accommodating cavity and having a rear cover accommodating cavity formed therein; and a rack being arranged to be stationary in the handle accommodating cavity relative to the handle housing, the rack having a battery receiving portion; wherein the electric toothbrush further comprises an electrical connection assembly having a bracket and a conductive member mounted on the bracket, the electrical connection assembly being arranged adjacent to the battery receiving portion of the rack and being attached to the rack via a sliding mechanism, the sliding mechanism being configured to allow the electrical connection assembly to slide relative to the rack between a first position in which the conductive member of the electrical connection assembly is located at an end of the battery receiving portion to permit electrical connection and a second position in which the electrical connection assembly moves so that the conductive member is away from the battery receiving portion to form a passage allowing a battery to be installed or removed relative to the battery receiving portion.

According to another aspect of the disclosure, the electrical connection assembly further comprises a charging coil wound on the bracket, the charging coil being slidable between the first position and the second position with the electrical connection assembly, wherein the battery receiving portion receives a rechargeable battery.

According to another aspect of the disclosure, the electric toothbrush further comprises a PCB board mounted on the rack, wherein the PCB board forms a stopper, the stopper configured to abut against the electrical connection assembly when the electrical connection assembly is in the second position to prevent it from being detached from the bracket.

According to another aspect of the disclosure, the handle housing has an elongated cylindrical body with a longitudinal axis extending through the opening, wherein the sliding mechanism is configured to move the electrical connection assembly relative to the opening in a direction transverse to or perpendicular to the longitudinal axis.

According to another aspect of the disclosure, the conductive member is fixedly connected to a PCB board or a motor via a flexible connecting wire with a length set to be sufficient to allow the electrical connection assembly to slide to the second position.

According to another aspect of the disclosure, the electrical connection assembly is arranged to protrude from the opening in the handle housing, wherein the rear cover forms a rear cover accommodating cavity, and after the rear cover is mounted on the handle housing, the electrical connection assembly is accommodated within the rear cover accommodating cavity.

According to another aspect of the disclosure, the sliding mechanism comprises a first sliding member disposed on the bracket of the electrical connection assembly; and a second sliding member is disposed on the rack or the handle housing; wherein the matching shapes of the first and second sliding members are configured to allow the first and second sliding members to slide relative to each other but prevent the electrical connection assembly from separating from the rack.

According to another aspect of the disclosure, the electric toothbrush is provided with a stopper configured to restrict the sliding mechanism from moving beyond a first position and a second position, the stopper being provided on the bracket of the electrical connection assembly, on a PCB board on the rack, on the rack, and/or on the handle housing. Preferably, the stopper comprises a first stopper for limiting the first position, the first stopper being disposed on the bracket, wherein in the first position, the first stopper is stopped by the rack; and a second stopper for limiting a second position, the second stopper being disposed on the PCB board, wherein in the second position, the second stopper is stopped by the bracket of the assembly.

According to another aspect of the disclosure, a PCB board is provided on the rack, and the sliding mechanism is configured to move radially to a second position toward the side on which the PCB board is provided.

According to another aspect of the disclosure, the electric toothbrush comprises a rechargeable battery and a charging coil wound on the rack, wherein an inner diameter of the charging coil is larger than an outer diameter of the battery.

With the electric toothbrush according to the disclosure, after the rechargeable battery is damaged or degraded, ordinary consumers can easily replace the rechargeable battery without special tools to continue using the electric toothbrush.

### BRIEF DESCRIPTION OF THE DRAWINGS

For a more complete understanding of the present disclosure, the following description of exemplary embodiments may be considered in conjunction with the accompanying drawings, in which:
FIG. 1 shows a perspective view of an electric toothbrush according to a preferred embodiment of the present disclosure.
FIG. 2 shows a perspective view of a portion of an internal structure of the electric toothbrush according to the preferred embodiment of the present disclosure.
FIG. 3 shows another perspective view of a portion of the internal structure of the electric toothbrush according to the preferred embodiment of the present disclosure.
Figure 4 shows a perspective view of a rear cover of an electric toothbrush according to the preferred embodiment of the present disclosure.
FIG. 5 shows a perspective view of the rear cover and a handle housing of the electric toothbrush according to the preferred embodiment of the present disclosure, with the handle housing viewed in cross section.
Figure 6 shows a partial perspective view of a rack assembly in the electric toothbrush according to the preferred embodiment of the present disclosure.
Figure 7 shows a perspective view of an electrical connection assembly of the electric toothbrush according to the preferred embodiment of the present disclosure.
FIG. 8 shows a partial cross-sectional view of a rack of the electric toothbrush according to the preferred embodiment of the present disclosure.
FIG. 9 shows a perspective view of the rack assembly in the electric toothbrush according to the preferred embodiment of the present disclosure with the electrical connection assembly slid to an open position.
FIG. 10 shows an end view of the electric toothbrush according to the preferred embodiment of the present disclosure with the rear cover open and the electrical connection assembly slid to the open position.
FIG. 11 shows another perspective view of the rack assembly in the electric toothbrush according to the preferred embodiment of the present disclosure with the electrical connection assembly slid to the open position.
FIG. 12 shows yet another perspective view of the rack assembly in the electric toothbrush according to the preferred embodiment of the present disclosure with the electrical connection assembly slid in the open position.

### List of reference signs

- 100: Electric toothbrush
- 1: Handle housing
- 11: Handle accommodating cavity
- 12: Protrusion inside the handle shell
- 2: Rear cover
- 21: Cantilever arm
- 22: Rear cover accommodating cavity
- 3: Toothbrush head
- 4: Rack
- 41: Rack protrusion
- 45: V-shaped protrusion
- 47: Rack stop groove
- 5: PCB board
- 51: PCB protrusion
- 6: Electrical connection assembly
- 61: Bracket
- 62: Conductive member
- 621: Connecting wire
- 63: Charging coil
- 631: Charging coil lead
- 66: V-shaped slot
- 67: Stop block
- 7: Rechargeable battery
- 9: Switching device
- L: Longitudinal axis

### DETAILED DESCRIPTION

The disclosure will be further described below in conjunction with specific embodiments and the accompanying drawings. In the following description, more details are set forth to facilitate a thorough understanding of the disclosure. However, it is obvious that the disclosure can be implemented in various other ways different from those described herein. Those skilled in the art can make similar generalizations and deductions according to practical application situations without departing from the connotation of the disclosure. Therefore, the content of this specific embodiment should not be construed as limiting the protection scope of the disclosure.

In the following description, "front" usually refers to a side or a direction of the electric toothbrush 100 closer to the toothbrush head, while "rear" usually refers to a side or a direction of the electric toothbrush 100 away from the toothbrush head.

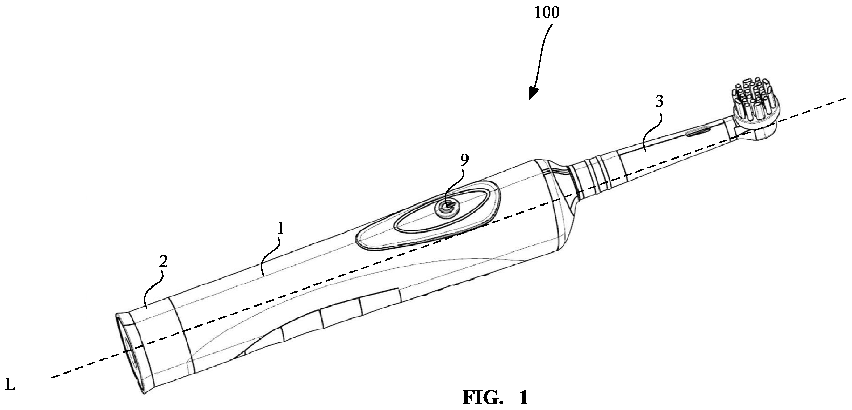

FIG. 1 shows a perspective view of an electric toothbrush 100 according to a preferred embodiment of the present disclosure. As shown in FIG. 1, the electric toothbrush 100 comprises a handle portion and a toothbrush head 3 replaceably connected to a drive shaft of the handle portion. The handle portion comprises, in its interior, a drive mechanism for driving the toothbrush head 3, a power supply assembly for supplying power to the drive mechanism, and a control device, wherein the drive mechanism typically comprises a motor, a transducer, etc.

The handle portion has a elongated, generally cylindrical outer profile. The handle portion comprises a handle housing 1 and a rear cover 2. A handle accommodating cavity 11 is formed inside the handle housing 1, and an opening is formed at a rear end of the handle accommodating cavity 11. A rear cover accommodating cavity 22 is formed inside the rear cover 2. After the handle housing 1 and the rear cover 2 are attached together, the handle accommodating cavity 11 communicates with the rear cover accommodating cavity 22 to form an entire accommodating cavity of the handle portion.

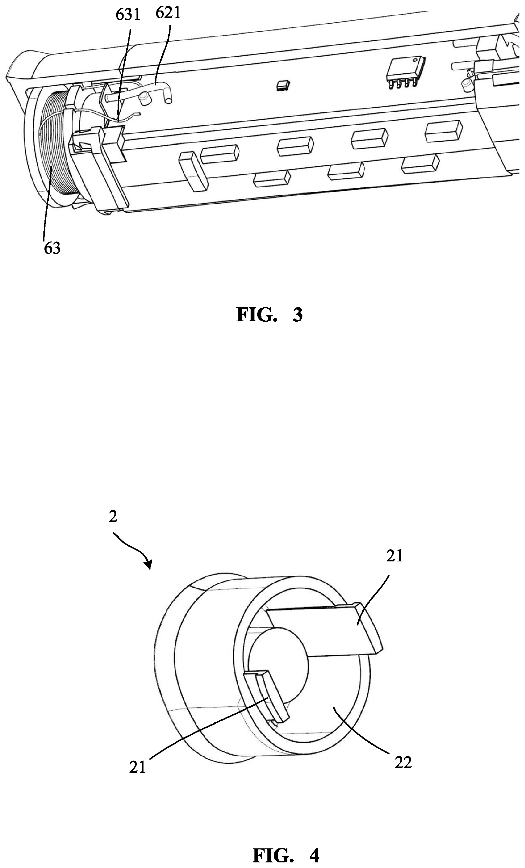

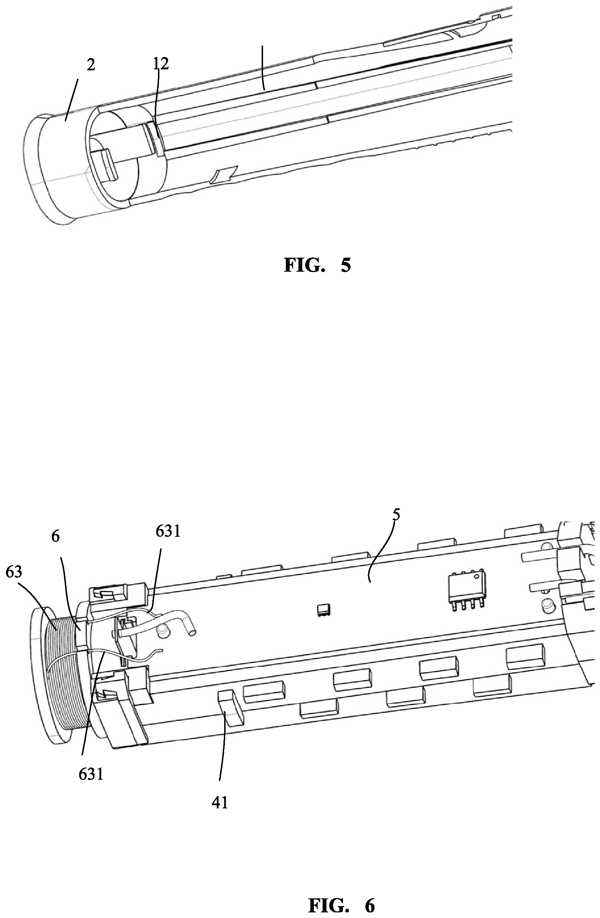

The rear cover 2 is typically detachably attached to an opening at the rear end of the handle housing 1 via a snap-fit or threaded connection, forming a waterproof, sealed connection. In this embodiment, as shown in FIGS. 4 and 5, the rear cover 2 is provided with two cantilever arms 21 arranged separately adjacent to an inner side of the circumferential wall of the rear cover 2. Free ends of the cantilever arms 21 are provided with hooks, and correspondingly, two matching grooves are formed on an inner surface of the rear end of the handle housing 1. Through a snap-fit engagement of the hooks and grooves, the rear cover 2 can be locked at the opening of the handle housing 1, such that the rear cover 2 is constrained in the direction of the longitudinal axis L of the handle housing 1 of the electric toothbrush 100.By rotating the rear cover 2 relative to the handle housing 1, the two cantilever arms 21 in the rear cover 2 can be disengaged from the grooves, thereby allowing the rear cover 2 to be removed relative to the handle housing 1.

Furthermore, the handle housing 1 is also provided with a switch device 9 and several display members for switch operation and status indication.

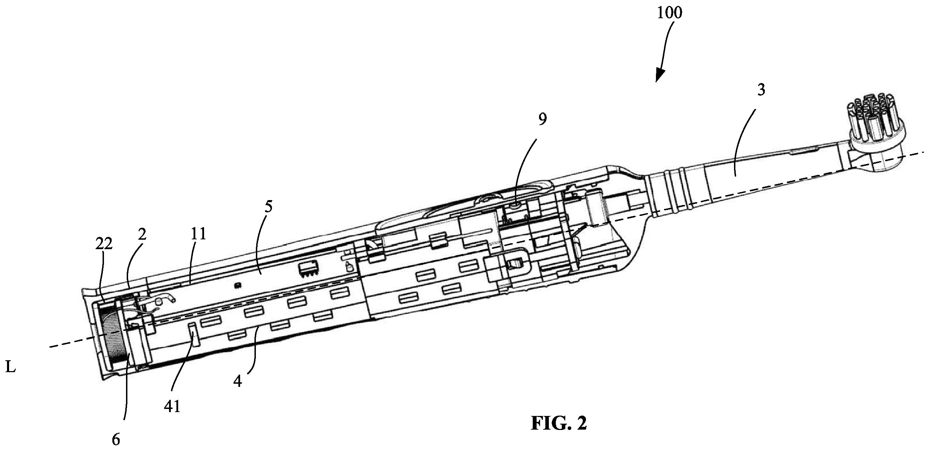

FIG. 2 shows the internal structure of the handle portion of the electric toothbrush 100 according to the preferred embodiment of the present disclosure, and FIG. 3 shows the portion of the internal structure of the handle portion of the electric toothbrush 100 according to the preferred embodiment of the present disclosure, showing a portion of a rack 4 comprising a battery receiving portion and an electrical connection assembly 6 for electrical connection of the battery receiving portion located at the rear end of the rack 4 in a particularly enlarged view.

As shown in FIGS. 2 and 3, the rack 4 is provided in the accommodating cavity of the handle portion of the electric toothbrush 100. The rack 4 is stationarily arranged in the handle accommodating cavity relative to the handle housing 1. The rack 4 is provided with a rack protrusion 41, and correspondingly, the handle housing 1 is provided with an inner protrusion 12. When the rack 4 is mounted into the handle housing 1, the rack protrusion 41 on the rack 4 is limited by the inner protrusion 12, whereby the rack 4 is constrained within the handle housing 1 and is prevented it from moving rearwardly away from the toothbrush head 3.

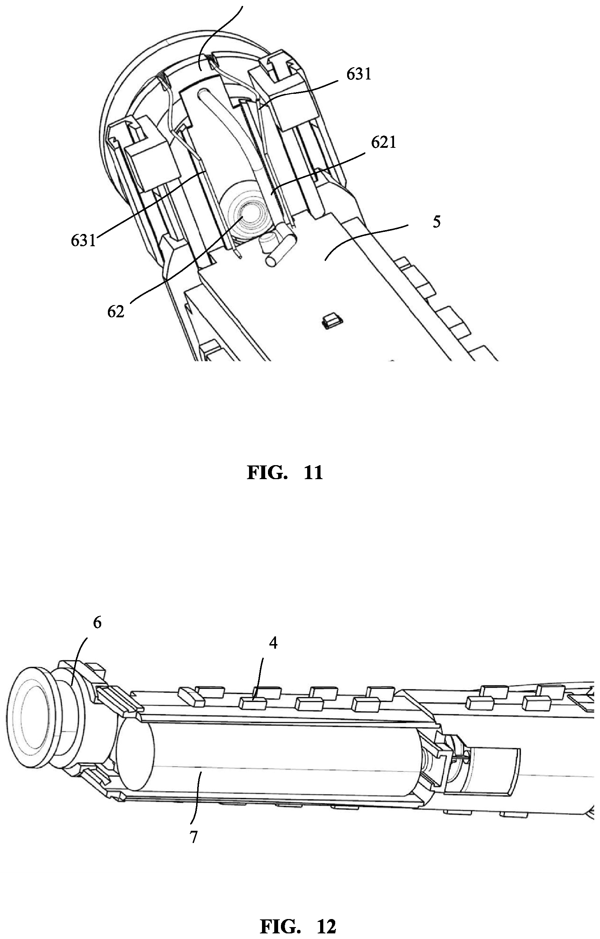

As shown in FIG. 12, the rack 4 is provided with a battery receiving portion for holding the battery 7 in position. The battery receiving portion is disposed on a portion of the rack 4 closest to the rear cover 2. In a preferred embodiment, the battery in the battery receiving portion is a rechargeable battery 7, but it should be understood that the rechargeable battery 7 may also be replaced with a non-rechargeable battery. In addition to the battery 7, the rack 4 is also configured to retain other components, such as a PCB board 5, the motor, and the transducer. As shown in FIG. 3, at least one PCB board 5 is mounted, for example, on the outer surface of one side wall of the battery receiving portion by a screw fastener.

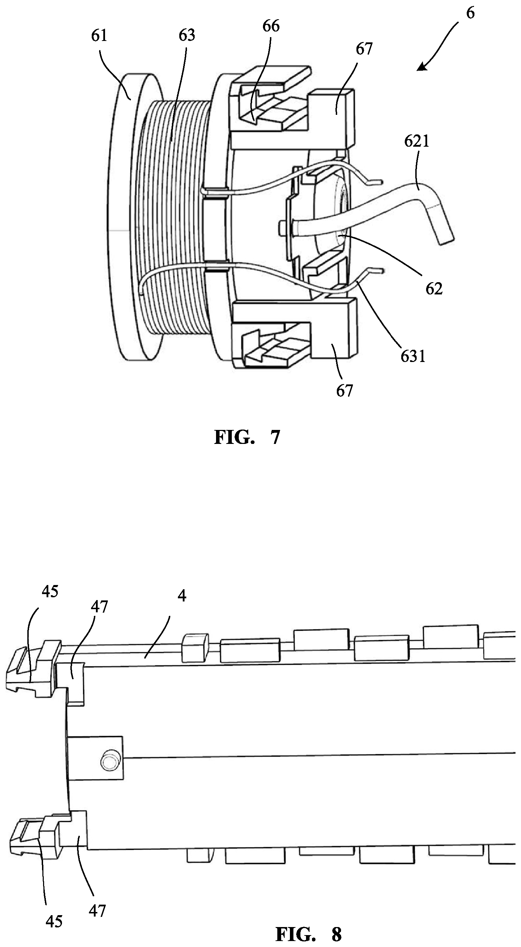

According to the present disclosure, the electric toothbrush 100 further comprises the electrical connection assembly 6 inside the handle thereof portion. The electrical connection assembly 6 is arranged adjacent to an end of the battery receiving portion adjacent to the rear cover 2 in a direction of the longitudinal axis L extending through a rear end opening of the handle housing 1 in FIGS. 1 and 2. The electrical connection assembly 6 comprises a bracket 61 and a plate-shaped conductive member 62 mounted on the bracket 61, among others. As shown in FIG. 7, the conductive member 62 is held at an end of the bracket 61 adjacent to the rack 4 by, for example, a slot structure. Preferably, the conductive member 62 is formed by stamping a sheet of conductive metal and has a protrusion formed at approximately the intermediate position facing the rechargeable battery 7 to provide a more reliable electrical connection. When the electric toothbrush 100 is assembled, the plate-shaped conductive member 62 is located at the end of the battery receiving portion adjacent to the rear cover 2, and the protrusion of the conductive plate 62 abuts against an electrode portion of the battery 7 located in the battery receiving portion to establish electrical communication.

Another conductive member is provided at an opposite end of the battery receiving portion to electrically connect with another electrode of the battery 7, thereby realizing power supply and charging of the battery. The conductive member at the end of the battery receiving portion away from the rear cover 2 is a fixed type, that is, it is arranged on the rack 4 and fixedly electrically connected to the PCB plate 5, for example, by means of soldering. Typically, this conductive member may be a coil spring.

Further, the electrical connection assembly 6 comprises a charging coil 63 wound around the bracket 61 for charging the rechargeable battery 7. The coil 63 slides with the bracket 61 relative to the rack 4. Specifically, the charging coil 63 is wound around one end of the bracket 61 immediately adjacent to the rear cover 2 so as to generate an induced current. Two flanges are integrally formed on the bracket 61, and spaced apart by a distance, and the charging coil 63 is wound and held between the two flanges. As shown in FIG. 6, the charging coil 63 has two lead wires 631 extending therefrom and being electrically connected to the PCB board 5. In the preferred embodiment, ends of the lead wires 631 of the coil are soldered to the PCB board 5. The lead wires 631 of the charging coil 63 should be provided long enough to allow the assembly 6 to slide without being affected, and the soldered ends of the lead wires 631 of the coil are not subjected to negative stress effects.

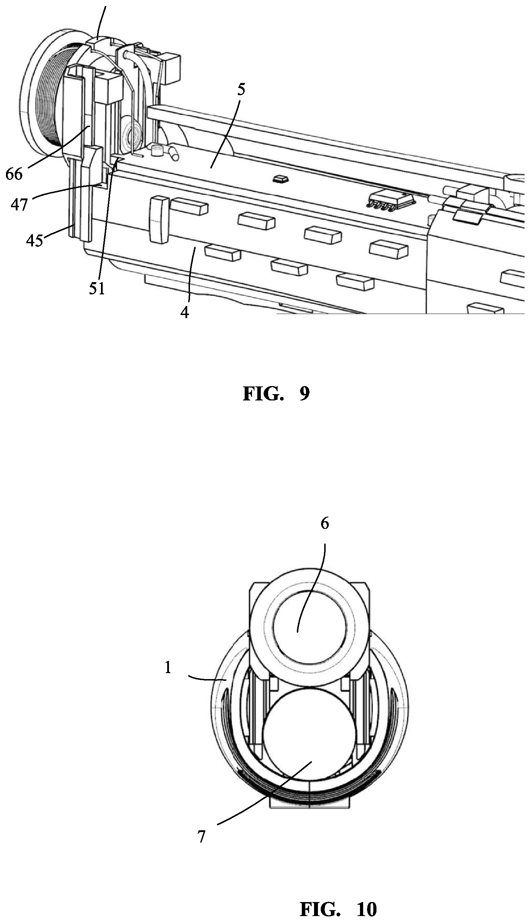

As shown in FIGS. 6 and 9, the electrical connection assembly 6 is attached to the rear end of the rack 4 via a sliding mechanism. The sliding mechanism is configured to allow the electrical connection assembly 6 to slide relative to the rack 4 between a connecting position and an open position. FIG. 6 shows the connected position (first position), in which the conductive member 62 of the electrical connection assembly 6 is located at an end of the battery receiving portion and abuts against the electrode portion of the battery 7. FIG. 9 shows the open position (second position), in which the electrical connection assembly 6 moves so that the conductive member 62 is away from the battery receiving portion to form a passage that allows the battery 7 to be installed and removed relative to the battery receiving portion.

In the preferred embodiment, the sliding mechanism mainly comprises a first sliding member integrally formed from the bracket 61 and a second sliding member integrally formed from the rack 4, wherein the first sliding member and the second sliding member match each other in shape. As shown in FIG. 7, the first sliding member on the bracket 61 is configured as a V-shaped slot 66 with a V-shaped cross-section, and two slots 66 are arranged in pairs at the two sides of one flange of the bracket 61 and are parallel to each other. Viewed in the direction facing the longitudinal axis L in FIG. 10, the pair of first sliding members are disposed radially outward of the battery. Correspondingly, at the rear end of the rack, strip-shaped V-shaped protrusions 45 are provided along edges of rear ends of two mutually parallel and spaced-apart side walls of the battery receiving portion. The V-shaped protrusions 45 are configured to be matingly engaged with the V-shaped slots 66. The V-shaped protrusions 45 and the V-shaped slots 66 extend a certain length in the direction perpendicular to the longitudinal axis of the handle housing 1, allowing the electrical connection assembly 6 to move relative to the rack 4 in the radial direction of the battery 7 and to form a passage for installing and removal that fully exposes the battery. Meanwhile, the mating shapes of the protrusions 45 and the slots 66 are configured such that the electrical connection assembly 6 and the rack 4 remain attached during the sliding of the protrusions and the slots, and the assembly 6 and the rack 4 are prevented from disengaging in the direction of the longitudinal axis L.

It should be understood that the mutually cooperating sliding members of the sliding mechanism may also form other mating shapes. In some other alternative embodiments, only one sliding mechanism may be provided, which is located on one radial side of the battery. In addition, the second sliding member of the sliding mechanism may also be integrally provided at the rear end opening of the handle housing 1 to allow the electrical connection assembly to slide relative to the opening, thereby forming a passage for installing and removing the battery 7.

Further, to limit a range of movement of the sliding mechanism, a stopper is provided in the handle to prevent the sliding mechanism from sliding beyond the range defined by the first and second positions. Since both the coil 63 and conductive member 64 on the electrical connection assembly 6 are soldered to the PCB board 5 via flexible electrical connection wires, damage to the soldered parts may occur if the sliding mechanism moves beyond the first or second position, which needs to be avoided.

To this end, in the preferred embodiment, protrusions 51 are provided on the PCB board 5 as the stopper to limit the second position. Preferably, the protrusions 51 are also arranged in pairs. As shown in FIG. 9, the protrusion 51 protrudes towards the electrical connection assembly 6 from the rear edge of the PCB board 5 facing the rear cover 2, and a corresponding groove is provided on the bracket 61 to accommodate the protrusion 51 of the PCB board 5. When the electrical connection assembly 6 moves to the second position, the protrusion 51 abuts against the stopper on the bracket 61 of the electrical connection assembly 6 in the sliding direction, thereby limiting the electrical connection assembly 6 to prevent it from sliding beyond the second position.

On the other hand, two stop blocks 67 are also provided on the bracket 61 of the electrical connection assembly 6 as the stoppers to limit the first position. The stop blocks 67 are respectively arranged adjacent to the two V- shaped slots 66. Preferably, the slots 66 and the stop blocks 67 are integrally formed with the bracket 61. When the electrical connection assembly 6 moves to the first position in the sliding direction, the stop blocks 67 abut against the rack stop grooves 47 on the rack 4 or the PCB board 5 on the rack 4, thereby stopping the electrical connection assembly 6 at the connecting position where the conductive member 62 can abut against the battery 7.

It should be understood that in other alternative embodiments, the stopper can be provided in other locations. For example, the stopper that limits the end points of the travel of the two ends of the sliding mechanism can be provided on the rack 4 or on the bracket 61 of the electrical connection assembly 6. In other embodiments, it can also be integrally formed on the inner side of the handle housing 1.

Furthermore, in order to minimize the impact on the connection portions of the lead wires 631 of the coil 63 and the flexible connecting wire 621 of the conductive member 62 to the PCB board 5 when the electrical connection assembly 6 slides to the second position shown in FIGS. 9 and 10, in this embodiment, the sliding mechanism is configured to move radially to the second position toward the side on which the PCB board 5 is provided. However, it should be understood that other sliding directions are also possible, for example, the sliding direction of the sliding mechanism may be parallel to the plane direction of the PCB board 5 on one side wall of the battery receiver portion.

To allow the electrical connection assembly 6 to move radially relative to the handle portion to the open position, the electrical connection assembly 6, together with the sliding mechanism, is arranged to protrude from the rear end opening of the handle housing 1. That is, as shown in FIG. 2, when the rear cover 2 is mounted on the handle housing 1, the electrical connection assembly 6 is at least partially accommodated in the accommodating cavity 22 of the rear cover viewed in the longitudinal axis direction of the handle portion.

According to the first embodiment, the disassembly process of the rechargeable battery 7 is as follows.

First, the rear cover 2 is removed by rotating the rear cover 2 relative to the handle housing 1, exposing the rear end opening of the handle housing 1. At this point, at least a portion of the electrical connection assembly 6 is exposed beyond the rear end opening. Then, the electrical connection assembly 6 is moved in a direction radial to the handle housing 1 to the second open position by means of the sliding mechanism, allowing the passage for installing and removing the battery 7 to be formed, as shown in FIG. 10. In this way, the rechargeable battery 7 can be taken out along the longitudinal axis L of the electric toothbrush 100. After that, a new rechargeable battery 7 is inserted, and the electrical connection assembly 6 is slid to the first connection position in the opposite sliding direction. Then, the rear cover 2 is locked, and the replacement of the battery 7 is completed. Since the charging coil 63 and the conductive member 62 soldered to the PCB board 5 are both provided with lead wires 631 or connecting wires 621 of a sufficiently long length, when the assembly 6 is slid to the open position, as shown in FIG. 9, the charging coil 63 and the conductive member 62 can always maintain electrical connection with the PCB board 5, and the original fixed electrical connection remain intact, making the replacement of the rechargeable battery 7 of the electric toothbrush 100 simple and reliable.

Other variations of the disclosure are also possible. In an alternative embodiment, the electrical connection assembly 6 does not comprise a charging coil, instead, the charging coil is wound around the rack 4, typically adjacent to the rear cover 2, and the inner diameter of charging coil (i.e., the diameter of the hollow portion) is larger than the outer diameter of the rechargeable battery 7. The electrical connection assembly comprises only a bracket and conductive members for contacting the electrode portions of the rechargeable battery. The assembly is slidably attached to the rear end of the rack 4, such that the assembly brings the conductive members to slide to an open position to expose the passage for installing and removing battery, allowing the rechargeable battery to be removed from the handle housing 1 through the hollow portion of the charging coil. During this process, the conductive member maintains electrical connection with the PCB board at all times via a flexible connecting wire.

The above embodiments are described in conjunction with the rechargeable battery. It should be understood that the above solutions can also be applied to non-rechargeable batteries. When using non-rechargeable batteries, the charging coil can be omitted.

In the above embodiments, the PCB board 5 is provided on the rack 4 by means of threaded connection, for example, and the conductive members at both ends of the battery housing are soldered to the PCB board. However, in other alternative embodiments, the conductive members can also be directly electrically connected to the motor provided in the handle portion.

With the electric toothbrush according to the disclosure, after the rechargeable battery is damaged or degraded, ordinary consumers can readily replace the rechargeable battery without special tools, thereby allowing the continued use of the electric toothbrush.

Although the present disclosure has been disclosed above with reference to preferred embodiments, these embodiments are not intended to limit the present disclosure. Any person skilled in the art may make possible variations and modifications without departing from the spirit and scope of the present disclosure. Therefore, any modifications, equivalent changes, and improvements made to the above embodiments based on the technical essence of the present disclosure, without departing from the technical solution of the present disclosure, shall fall within the protection scope defined by the claims of the present disclosure.

## Claims

1. An electric toothbrush, comprising:
a handle housing having a handle accommodating cavity formed therein, the handle accommodating cavity having an opening at a rear end;
a rear cover detachably attached to the opening of the handle accommodating cavity and having a rear cover accommodating cavity formed therein; and
a rack being stationary in the handle accommodating cavity relative to the handle housing, the rack having a battery receiving portion;
wherein the electric toothbrush further comprises an electrical connection assembly having a bracket and a conductive member mounted on the bracket, the electrical connection assembly being arranged adjacent to the battery receiving portion of the rack and attached to the rack via a sliding mechanism,
wherein the sliding mechanism is configured to allow the electrical connection assembly to slide relative to the rack between a first position in which the conductive member of the electrical connection assembly is located at an end of the battery receiving portion to permit electrical connection and a second position in which the electrical connection assembly moves so that the conductive member is away from the battery receiving portion to form a passage allowing a battery to be installed into or removed from the battery receiving portion.

2. The electric toothbrush of claim 1, wherein the electrical connection assembly further comprises a charging coil wound around the bracket, the charging coil being slidable between the first position and the second position with the electrical connection assembly,
wherein the battery receiving portion receives the rechargeable battery.

3. The electric toothbrush of claim 2, wherein a PCB board is provided on the rack, and a lead wire of the charging coil is soldered to the PCB board, and a length of the lead wire is set to be sufficient to allow the electrical connection assembly to slide to the second position.

4. The electric toothbrush of claim 1, wherein the electrical connection assembly is arranged to protrude from the opening in the handle housing,
wherein the rear cover forms a rear cover accommodating cavity, and when the rear cover is mounted onto the handle housing, the electrical connection assembly is accommodated within the rear cover accommodating cavity.

5. The electric toothbrush of claim 1 or claim 2, wherein the handle housing has an elongated cylindrical body with a longitudinal axis extending through the opening,
wherein the sliding mechanism is configured to allow the electrical connection assembly to move relative to the battery receiving portion in a direction transverse to or perpendicular to the longitudinal axis.

6. The electric toothbrush of claim 1, wherein the conductive member is fixedly connected to a PCB board or a motor via a flexible connecting wire with a length set to be sufficient to allow the electrical connection assembly to slide to the second position.

7. The electric toothbrush of claim 1, wherein the sliding mechanism comprises:
a first sliding member disposed on the bracket of the electrical connection assembly; and
a second sliding member is disposed on the rack or the handle housing;
wherein matching shapes of the first and second sliding members are configured to allow the first and second sliding members to slide relative to each other but prevent the electrical connection assembly from separating from the rack.

8. The electric toothbrush of claim 1 or claim 7, wherein the electric toothbrush is provided with a stopper configured to limit the sliding mechanism from moving beyond a range from the first position to the second position, the stopper being provided in one or both of the following positions:
on the bracket of the electrical connection assembly;
on a PCB board on the rack;
on the rack; and
on the handle housing.

9. The electric toothbrush of claim 8, wherein the stopper comprises:
a first stopper for limiting the first position, the first stopper being disposed on the bracket, wherein in the first position, the first stopper is stopped by the rack; and
a second stopper for limiting the second position, the second stopper being disposed on the PCB board, wherein in the second position, the second stop is stopped by the bracket of the assembly.

10. The electric toothbrush of claim 1, wherein the electric toothbrush comprises a charging battery, the charging coil wound around the rack with an inner diameter larger than an outer diameter of the battery.
